# EUROPÄISCHE PATENTSCHRIFT

(11) **EP 4 106 948 B1**
(45) Veröffentlichungstag und Bekanntmachung des Hinweises auf die Patenterteilung: **11.03.2026**
(21) Anmeldenummer: 21707663.7
(22) Anmeldetag: 22.02.2021
(51) Int. Cl.: B29C 73/10, B29C 73/26, B24C 3/32, B24C 7/00, B24C 3/06

(54) **VORRICHTUNG UND VERFAHREN FÜR EINEN MATERIALABTRAG AN FASERVERBUNDWERKSTOFFEN, INSBESONDERE ZUM SCHÄFTEN**
DEVICE AND METHOD FOR REMOVING MATERIAL FROM FIBRE COMPOSITES, IN PARTICULAR FOR SHAFTING
DISPOSITIF ET PROCEDE D'ENLEVEMENT DE MATERIEL SUR DES COMPOSITES FIBREUX, EN PARTICULIER POUR L'ARASAGE

(30) Priorität: 21.02.2020 DE 102020104689
(43) Veröffentlichungstag der Anmeldung: 28.12.2022
(73) Patentinhaber: Fraunhofer-Gesellschaft zur Förderung der angewandten Forschung eingetragener Verein, 80686 München (DE)
(72) Erfinder: BRIESKORN, Leander, 28359 Bremen (DE); HINTZE, Wolfgang, 28359 Bremen (DE)
(74) Vertreter: Eisenführ Speiser
(86) Internationale Anmeldenummer: PCT/EP2021/054274
(87) Internationale Veröffentlichungsnummer: WO 2021/165521

(56) Entgegenhaltungen:
- DE-A1- 10 257 241
- DE-A1- 19 747 838
- DE-A1- 4 019 744
- US-A1- 2012 186 520
- US-A1- 2019 143 484

## Beschreibung

Die vorliegende Erfindung betrifft das Gebiet des Materialabtrags an Faserverbundwerkstoffen und insbesondere den Materialabtrag zur Erstellung einer Schäftung, wie sie beispielsweise bei einer Reparatur eines Faserverbundes mit Faser und Harz vorgesehen wird.

Faserverbundstrukturen und -Laminate werden vermehrt in der Luftfahrt, Wind- und Automobilindustrie eingesetzt. Häufig treten Schäden an diesen Strukturen durch z.B. Hochgeschwindigkeitsstöße auf. Eine der großen Herausforderungen, denen die Branchen daher gegenüberstehen, ist die herkömmlich kostspielige und zeitaufwändige Reparatur des Faserverbundes. Um Faserverbund-Bauteile zu reparieren, müssen diese heutzutage aufwendig bearbeitet werden, indem die beschädigten Schichten zunächst einzeln entfernt werden. Dies geschieht, indem Schalgeometrien (Schäftungen) erzeugt werden. Die heutzutage überwiegend manuell durchgeführten Abtragprozesse für Reparaturen und Bearbeitungen an Faserverbundbauteilen sind extrem emissionsbelastet und benötigen einen hohen Zeitaufwand von der Vorbereitung bis zur Nachbereitung einer sauberen Bearbeitungsstelle. Hier spielen zusätzlich Umwelt- und Gesundheitsaspekte eine große Rolle. Die Geschwindigkeit und Güte des Abtragprozesses ist außerdem stark von der Erfahrung des Werkers abhängig.

Derzeit in der Entwicklung stehende Automatisierungslösungen haben viele Einschränkungen und Nachteile, insbesondere hinsichtlich von Qualität und Genauigkeit der Bearbeitung. Besonderes Augenmerk bei der industriellen Nutzung eines automatisierten Abtragsystems liegt auf der emissionsfreien Bearbeitung und der möglichst universellen Nutzbarkeit (ortsunabhängig, verschiedene FVK-Bauteile, unterschiedliche Branchen), um ein breites Spektrum an Anwendungsfällen abzudecken (siehe z.B. "Composite Repair", Publikation UTC 102, April 1999, der Firma Hexel Composites, Duxford). Unter Immissionsschutzgesichtspunkten muss beim Abtragen der Einzellagen eine Absaugung oder Nachreinigung dafür sorgen, dass alle Stäube und Restverschmutzungen entfernt werden, um Kontaminationen zu vermeiden.

Hohe Abtragraten und großflächiges, in die Tiefe gehendes Abtragen bei gleichbleibender Qualität sind neuartige Herausforderungen im Bereich der automatisierten Bearbeitung von Reparaturstellen an Faserverbund-Bauteilen (siehe z.B. N. Bhatnagar, N. Ramakrishnan, N.K. Naik, R. Komanduri "On the machining of fibre reinforced plastic (FRP) composite laminates." International Journal of Machine Tools & Manufacture 1995; 35(5): 701-716). Eine Standardisierung und automatisierte, d.h. qualitätsgesicherte, Regelung wird notwendig, welche einen erheblichen zeitlichen Vorteil mitbringt. Automatisierte Anlagen sind ebenfalls meistens kostenintensiv, schwer zu transportieren und benötigen einen hohen Platzbedarf.

Derzeit bestehen insbesondere Herausforderungen hinsichtlich einer großen Materialvielfalt, zu hoher Vor-, Nachreinigungs- und Nachbereitungszeiten, dem Fehlen von standardisierten Prozeduren zur Automatisierung des Abtragprozesses, dem Fehlen von prozessbegleitender Qualitätskontrolle heute und entsprechender Sensorik, der Immissionsfreiheit oder zumindest -beschränkung bei automatisierten Prozessen an den Oberflächen, des Gewichts- und Platzbedarfs automatisierter Prozesse, der Präzision der automatisierten Abtragung, der noch notwendigen aufwendigen Handarbeiten und Nachreinigungsarbeiten, der damit verbundenen Sicherheits- und Gesundheitsrisiken, dem Fehlen eines automatisierter in-field Technologie und dem Fehlen eines zugelassenen automatisierten Abtragverfahren bei Faserverbundwerkstoffen.

Der derzeit zugelassene Reparaturprozess von Faserverbundwerkstoffen beinhaltet die Abtragung der beschädigten Faserverbund-Schichten, bevor die Patch-Reparatur-Lagen auf den entfernten Bereich aufgeklebt werden. Eine großflächige Abtragung von Faserverbund muss um den beschädigten Bereich herum erfolgen. Die einzelnen Schichten von Verbundstrukturen müssen hierbei bearbeitet und abgetragen werden, bis alle darunterliegenden beschädigten Schichten entfernt wurden. Die Abtragung der Schichten erfolgt meist anhand eines gestuften oder konischen Schäftungsverlaufs. Wie im Artikel "Instandsetzung von Faserverbundbauteilen" (F. Ellert, Lightweight-Design Journal, 03/2015) ausgeführt, enthält der Prozessablauf einer Reparatur von Faserverbundbauteilen in der Regel die Prozessschritte einer Begutachtung der Bearbeitungs- Schadstelle, Kategorisierung, Vorreinigung, eines Abtragens von Einzellagen, eines Nachreinigens, eines Herstellens eines Reparaturpatches und eines Aufklebens oder Laminierens des Reparaturpatches einschließlich des Aushärtens. Abschließend wird je nach Anwendungsgebiet eine NDT-Prüfung zur Kontrolle durchgeführt (siehe z.B. Wachinger G., Thum C., Scheid P.: "Reparaturfähigkeit und Reparaturkonzepte bei Strukturen aus faserverstärkten Kunststoffen", in Henning F., "Handbuch Leichtbau" München: Hanser Verlag, 2011)

Derzeit wird der Abtragvorgang von Faserverbundmaterialien bis auf wenige Ausnahmen durch manuelles Schleifen ausgeführt, die ein Werker mittels handgeführtem Elektro- oder Druckluftschleifgeräts durchzuführen hat. Dadurch hängt das Ergebnis erheblich vom Kenntnisstand und der Geschicklichkeit des Fachpersonals ab. Unterschiedliche Materialien und unterschiedlich starke Fehlstellen erfordern dabei eine auf jeden Anwendungsfall angepasste Behandlungsstärke. Die Kontrolle erfolgt dabei nur über eine Sichtprüfung. Beim manuellen Abtragen muss der Werker Schutzkleidung tragen, um sich vor den Faserverbundstäuben zu schützen. Hier besteht ein großes Gesundheitsrisiko. Zusätzlich ist das manuelle Bearbeiten aus ergonomischer Sicht eine starke körperliche Belastung für den Werker, da das präzise Abtragen mit den schweren Schleifgeräten und den beim kontaktbehafteten Bearbeiten auftretenden mechanischen Kräften eine große Ausdauer erfordert (siehe z.B. F. Cénac, F. Collombet, R. Zitoune and M. Déléris, "Abrasive-water-jet blind-machining of polymer matrix composite materials", Université de Toulouse). Das Druckluft-Strahlen verwendet einen Hochgeschwindigkeitsstrom von festen Schleifpartikeln zum Abtragen des Materials. Dieses wird hauptsächlich in Strahlkabinen durchgeführt, um die Stäube absaugen zu können. Der Werker muss einen Schutzanzug tragen.

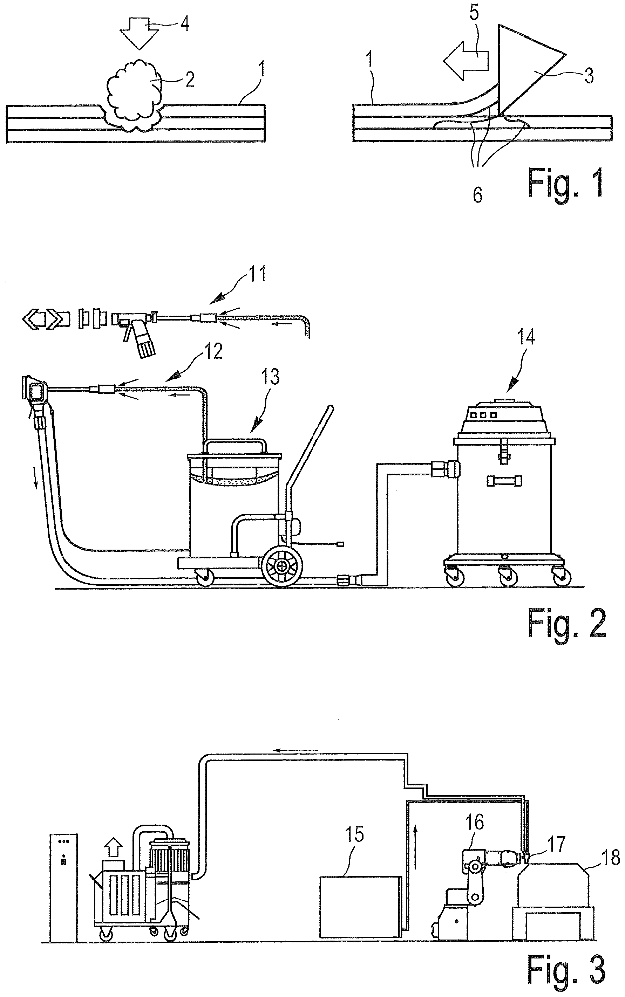

Für die Luftfahrt gibt es derzeit kein weltweit zugelassenes automatisiertes Verfahren zum Abtragen von Beschädigungen an Faserverbundbauteilen, z.B. für die in-field-Reparatur an CFK-Rümpfen bei B787 und A350. Ein automatisierter, mechanischer Materialabtrag wird zurzeit mit Fräsmaschinen erprobt, fast ausschließlich noch im Prototypenstadium. Nachteile sind aufwendige Nachreinigungsprozesse der Reparaturstelle, Zeitdauer, Kosten, Größe und Gewicht der Maschinen und die Werkzeug-Positionierung. Zur Immissionsvermeidung werden große Fräskabinen aufgebaut und aufwendige Absaugungsvorrichtungen für Reinigungen der Kabinen und Bauteile integriert (siehe Dittmar, Hagen; Laserbasierte Reparaturvorbereitung von Composite-Strukturen, LZH; 2017). Fräsen verwendet Hartmetall- oder Diamantwerkzeuge, um das Faserverbund-Material zu bearbeiten und zu entfernen (siehe Fig. 1). Dabei ist die Wirkgeschwindigkeit tangential zur Werkstückoberfläche gerichtet. Die dadurch auftretenden Kräfte verursachen starke intralaminare und interlaminare Scherspannungen im Faserverbund, wodurch ein Risiko der Delaminierung und des Faserauszugs im Verbund besteht und oberflächlich aus dem Verbund gelockerte lose Faserenden entstehen. Darüber hinaus erzeugt der Kontakt solcher Werkzeuge auch thermische Spannungen im Bauteil. Entwicklungen hinsichtlich einer Laserabtragung, die jeweils auf die Materialien abgestimmt werden müssen, sind Prozesse mit hohem Zeitaufwand, haben eine hohe Wärmeabgabe in die Bearbeitungsstelle und Umgebung und benötigen einen großen Anlagenaufwand. Die Genauigkeit und Präzision der Abtragung ist dabei vor allem im Rand- und Übergangsbereich der Lagen sehr begrenzt (siehe ebenfalls Dittmar, Hagen; Laserbasierte Reparaturvorbereitung von Composite-Strukturen, LZH; 2017). Das Wasserstrahlschneiden (AWJ) ist ein nasser Abtragungsvorgang mit hohen Anlagenkosten und großem Platzbedarf. Der Prozess birgt vor allem das Risiko einer unkontrollierten Kontamination bei der Reparatur der ausgerüsteten Struktur (siehe ebenfalls F. Cénac, F. Collombet, R. Zitoune and M. Déléris, "Abrasive-water-jet blind-machining of polymer matrix composite materials", Université de Toulouse).

Weitere Informationen zur Reparatur von Faserverbundwerkstoffen finden sich auch bei "Adaptive Machining for Efficient Manufacture and Repair of CFRP Components" von Claus Bremer (BCT GmbH, 6/2012) und "Care and repair of advanced composites" von K.B. Armstrong, W.F. Cole, L.G. Bevan (SAE International, London 2005).

Ansätze zum Detektieren von Schadstellen sind bereits bekannt und mit Verfahren der Radiografie, Ultraschall oder Thermografie möglich (siehe z.B. Schulungsmaterial SKZ Kunststoffzentrum; "Detektieren von Schäden an CFK Bauteilen", www.skz.de). Ein Vermessen von unbehandelten Faserverbund- Oberflächen mit 1 D/2D Linienscannern zur Abstandregelung und Inline-Bahnkorrekturen für automatische Roboterbewegungen wurde am Fraunhofer IFAM in Stade in vergangenen und laufenden Projekten betrachtet.

Eine vollautomatische Kontrolle von abgetragenen Schichten und folgender Bahnregelung mittels Sensorik während des Abtragprozesses ist in der Industrie bisher nicht vorhanden und stellt heutzutage mit den bisher verfolgten Ansätzen eine besondere Herausforderung dar. Bisherige teilautomatiserte Ansätze stützen sich auf eine kamerabasierte Überwachung der abgetragenen Oberflächen und werden durch eine visuelle Kontrolle des Werkers überprüft (siehe z.B. EP 2 442 941 B1).

Die zuvor beschriebenen Technologien zur automatisierten bzw. teilautomatisierten Schäftung sind zum Teil schon seit längerem bekannt und werden auch auf dem Markt angeboten. Aufgrund ihrer prinzip-bedingten technologischen Grenzen, Nachteile und Risiken konnten sie sich gegenüber dem händischen Schäften bisher nicht durchsetzen.

Das Verfahren des Vakuumsaugstrahlens (als einem Beispiel eines Strahlverfahrens) wurde bisher lediglich zur oberflächlichen Entfernung von Verunreinigungen oder zur Entfernung von Deckschichten bei Faserverbundwerkstoffen (d.h. ohne Abtragen auch der Faser selbst), etwa zum dünnschichtigen Aufrauen oder Aktivieren vor einem Kleben eingesetzt.

Eine Vakuumsaugstrahleinheit umfasst als drei Hauptkomponenten eine Strahldüseneinheit, einen Industriesauger und eine Materialzuführung. Das Strahlmedium wird durch Unterdruck über ein Rohr- und Schlauchsystem an die zu behandelnde Werkstückoberfläche befördert. Über den Industriesauger wird der nötige Unterdruck erzeugt und das Strahlmaterial aus einem Vorratsbehälter heraus beschleunigt. Der Strahlmitteltransport besteht aus einer Zuführungs- und einer Absaugungseinheit, welche mit der Oberfläche vakuumdicht abgeschlossen sind. Der Abtragmechanismus an der Oberfläche findet am Strahlkopf statt. Nachdem das Strahlgut dort auf die Werkstückoberfläche getroffen ist und diese dort abträgt, werden die Restpartikel und abgetragenen Werkstückpartikel über die Absaugung abgeführt. Dadurch ergibt sich eine saubere Werkstückoberfläche nach dem Strahlen. Vorteile des Vakuumsaugstrahlens gegenüber herkömmlichen Sandstrahlverfahren sind unter anderem ein geringerer Druck und somit eine geringere Bauteilbelastung sowie das emissionsfreie Behandeln. Kommerzielle Vakuumsaugstrahlanlagen werden beispielsweise zum Entgraten von Metalloberflächen angeboten (siehe Ruhland, Sigurd: Vakuumsaugstrahlen in der Fertigungslinie, GP Innovation GmbH, JOT 7, 2014). Die manuelle Bearbeitung mittels handgeführter beweglicher Strahllanze wird zum Beispiel zur Entfernung von Lackschichten und zum Anrauen vor dem Kleben verwendet.

Bereits bekannte Ansätze im Zusammenhang mit Vakuumsaugstrahlen werden z.B. in DE 10 2010 020 691 A1, DE 19 747 838 C2, DE 10 2010 060 664 A1, EP 1 136 174 A1, US 2004/053561 A1 oder EP 2 442 941 B1 beschrieben.

US 2019/143484 offenbart ein Verfahren gemäß dem Oberbegriff des Anspruchs 1 und eine Vorrichtung gemäß dem Oberbegriff des Anspruchs 14.

Die bekannten Ansätze zum Vakuumsaugstrahlen erlauben allerdings, soweit sie - neben dem Harz im Verbundwerkstück - überhaupt auch die Fasern abtragen, lediglich eine derart geringe Abtraggeschwindigkeit, dass sie als Alternativen zum händischen Schäften nicht tauglich sind.

Ein der vorliegenden Erfindung zugrundeliegendes Ziel ist es, ein Verfahren und eine entsprechende Vorrichtung zum Materialabtrag an einem Faserverbundwerkstück mit Fasern und Harz bereitzustellen, mit der zumindest einige Nachteile der derzeit zu einem solchen Materialabtrag, insbesondere zur Reparatur oder Reparaturvorbereitung, eingesetzten Verfahren und Vorrichtungen vermieden oder zumindest verringert werden.

Es ist hierbei insbesondere gewünscht, eine Lösung vorzustellen, die als Grundlage für eine weitgehende oder sogar vollständige Automatisierung bei der Reparatur eines Faserverbundwerkstücks dienen kann.

Erfindungsgemäß wird nach einem ersten Aspekt ein Verfahren zum Materialabtrag an einem Faserverbundwerkstück mit Fasern und Harz vorgeschlagen, wie es in Anspruch 1 definiert ist, nämlich mit den Schritten des Bereitstellens eines Druckgefälles in einem Transportgas, des Bereitstellens eines Strahlmaterials, des Beschleunigens des Strahlmaterials durch das Druckgefälle auf eine Oberfläche des Faserverbundwerkstücks, des abrasiven Abtragens von Material einschließlich Fasern und Harz aus dem Faserverbundwerkstück in einem durch eine Abtrageeinheit und das Faserverbundwerkstück bestimmten Arbeitsraum und des Abführens von abgetragenem Material und Strahlmaterial aus dem Arbeitsraum durch das Druckgefälle, wobei das Strahlmaterial durch ein Strahlrohr auf die Oberfläche des Faserverbundwerkstücks geleitet wird und das Strahlmaterial eine mittlere Korngröße im Bereich von 200 µm bis 500 µm aufweist und ein Abstand des Strahlrohrs zum Faserverbundwerkstück im Arbeitsraum in einem Bereich von 3 bis 12 mm liegt.

Erfindungsgemäß wird nach einem zweiten Aspekt eine Vorrichtung zum automatisierten Materialabtrag an einem Faserverbundwerkstück mit Fasern und Harz vorgeschlagen, wie sie in Anspruch 16 definiert ist, nämlich mit einer Druckeinheit, die zum Bereitstellen eines Druckgefälles in einem Transportgas ausgestaltet ist, einer Materialzufuhr, die zum Bereitstellen eines Strahlmaterials ausgestaltet ist, und einer Abtrageeinheit mit einem Strahlrohr, wobei die Vorrichtung dazu ausgestaltet ist, durch ein von der Druckeinheit bereitgestelltes Druckgefälle das von der Materialzufuhr bereitgestellte Strahlmaterial auf eine Oberfläche des Faserverbundwerkstücks hin zu beschleunigen und zu leiten, so dass ein abrasives Abtragen von Material einschließlich Fasern und Harz aus dem Faserverbundwerkstück in einem durch eine Abtrageeinheit und das Faserverbundwerkstück bestimmten Arbeitsraum bewirkt wird, wobei die Vorrichtung ferner zum Abführen von abgetragenem Material und Strahlmaterial aus dem Arbeitsraum durch das Druckgefälle ausgestaltet ist, wobei das Strahlmaterial eine mittlere Korngröße im Bereich von 200 µm bis 500 µm aufweist und im Betrieb der Vorrichtung ein Abstand des Strahlrohrs zum Faserverbundwerkstück im Arbeitsraum in einem Bereich von 3 bis 12 mm liegt.

Ein Teil des Hintergrunds der vorliegenden Erfindung findet sich in den folgenden Überlegungen.

Es wurde gefunden, dass ein für einen lediglich oberflächennahen Abtrag (weniger als 100 µm Tiefe) eingesetztes und an sich bekanntes Verfahren wie das Vakuumsaugstrahlen bei geeigneter Wahl des Strahlmaterials und des Abstands des Strahlrohrs zur Oberfläche für einen etwa für ein Schäften relevanten Materialabtrag eingesetzt werden kann.

Das Vakuumsaugstrahlen lässt sich allerdings erst durch die Kombination der gegenüber dem bekannten Ansatz größerem Korn und geringerem Abstand zur zu bearbeitenden Oberfläche wirtschaftlich zu einem im Ausmaß signifikanten aber dennoch ausreichend genauen Abtrag von Material aus dem Faserverbundwerkstück einsetzen.

Die Nutzung lediglich eines in der mittleren Korngröße größeren Strahlmaterials bei ansonsten beibehaltenen Parametern des bekannten Ansatzes zum Vakuumsaugstrahlen (der ja nur zur Oberflächenbearbeitung vorgesehen war) führt zu einer längeren Bearbeitungszeit, wobei zudem der Abtrag ungleichmäßiger wird.

Vorliegend wird die mittlere Korngröße durch Siebung (10µm bis Knopfgröße) bestimmt. Hierbei gilt die einem Siebdurchgang von 50 % entsprechende Korngröße als "Mittlere Korngröße" (MK). Der prozentuale Gewichtsanteil an Körnern zwischen den Korngrößen 4/3 MK und 2/3 MK wird als "Gleichmäßigkeitsgrad" (GG) bezeichnet.

Ein geringerer Abstand des Strahlrohrs zur Oberfläche hat bei den herkömmlich genutzten Strahlmaterialen nur wenig Wirkung, wobei zudem beobachtet wurde, dass bisweilen die Genauigkeit in der Bearbeitung abnimmt, also dass wiederum der Abtrag ungleichmäßiger wird.

Es wurde nun allerdings gefunden, dass die Kombination der Wahl der Korngröße des Strahlmaterials zusammen mit der passenden Einstellung des Abstandes des Strahlrohrs überraschenderweise zusammen zu einem starken und entsprechend schnellen Materialabtrag führt, bei dem auch die gewünschte Genauigkeit erreicht wird.

Auch wenn eine Realisierung der Erfindung in Form eines Vakuumsaugstrahlens bevorzugt ist, ist zu bemerken, dass im Rahmen der Erfindung ein Vakuum im Sinne eines Unterdrucks gegenüber der Normal-Atmosphäre als solches nicht notwendig, da im Grunde jedes ausreichend dimensionierte Druckgefälle für den Transport und Abtransport von Strahlmaterial und abgetragenem Material genutzt werden kann.

Da mit der vorliegenden Erfindung eine Freisetzung von Staub und dergleichen verhindert oder zumindest stark eingeschränkt werden kann, ist zudem eine enge Kontrolle der Ergebnisse des Materialabtrags möglich, was sich vorteilhaft auf die Möglichkeiten zur Automatisierung auswirkt.

Der erfindungsgemäße Ansatz ist robust gegenüber hybriden, d.h. aus unterschiedlichen Werkstoffgattungen aufgebauten Werkstücken. Prinzipbedingt sind die auf die Werkstückoberfläche lokal aufgebrachten Kräfte insbesondere beim Vakuumsaugstrahlen sehr klein, was insbesondere bei der Präzisionsbearbeitung dünnwandiger Leichtbaustrukturen vorteilhaft ist. Im Gegensatz zum Abtrag durch das Strahlmaterial belasten die Schneiden eines Zerspanwerkzeugs die Werkstückrandzone primär tangential in einer linienförmigen Zone. Dadurch ist die eingebrachte Spannung weniger konzentriert. Neben dem gewünschten Abtrag resultieren inter- und intralaminare Mikrorisse und aus dem Verbund oberflächlich gelöste Faserenden, die die Klebeignung der Werkstückoberfläche beeinträchtigen und eine nachträgliche Polierschleifoperation erfordern.

Beim bekannten Laserstrahlabtragen sind die extrem unterschiedlichen thermophysikalischen und optischen Eigenschaften der Bestandteile von Faserverbundkunststoffen und ggf. die Eigenschaften metallischer Decklagen schwer zu beherrschen. So muss die Wellenlänge je nach Werkstoff bzw. -kombination auf deren unterschiedliches Absorptionsverhalten abgestimmt werden. Die sehr niedrige Zersetzungstemperatur der Harzmatrix und die extrem hohe Sublimationstemperatur von Kohlefasern implizieren das Risiko, dass die Harzmatrix in der Umgebung der Bearbeitungsstelle thermisch geschädigt wird, wodurch inter- und intralaminare Risse und Delamination resultieren. Beim Laserabtragen von Faserverbundkunststoffen entstehen gesundheitsschädliche gasförmige Spaltprodukte, deren wirkstellennahe Erfassung angesichts der Variabilität von zu bearbeitenden Schadensstellen schwierig ist und daher hohen Aufwand erfordert. Diese Problematiken treten im Rahmen der Erfindung nicht auf.

Im Gegensatz zu Verfahren mit einer zur Bauteiloberfläche tangentialen Wirkbewegung (z.B. Fräsen, Schleifen) zeichnet sich der erfindungsgemäße Ansatz durch eine ausschließliche oder überwiegend normale Wirkbewegung zur Bauteiloberfläche aus. Diese ermöglicht ein Trennen der Fasern ohne oder weitgehend ohne Scher- oder Zugbelastungen auf das Faser-Matrix-Interface. Dadurch wird ein allmähliches Lösen von Faserenden aus der Matrix verhindert, welches die Qualität / Festigkeit nachfolgender Klebreparaturen beeinträchtigt und / oder einen weiten zwischen geschalteten Feinschleif-/Polierprozess erfordert, so dass dieser im Allgemeinen beim Einsatz der Erfindung entfallen kann.

Die schädliche Beeinträchtigung der Bauteiloberfläche bei Verfahren mit einer zur Bauteiloberfläche tangentialen Wirkbewegung ist zudem stark vom Verschleißzustand des Werkzeugs abhängig, hingegen entfällt der vorliegenden Erfindung durch das jeweils zugeführte Strahlmaterial (Abrasivmedium) dieser schädliche Einfluss (siehe Freese, J. de et al.: "End milling of Carbon Fiber Reinforced Plastics as surface pretreatment for adhesive bonding - effect of interlaminar damages and particle residues" THE JOURNAL OF ADHESION, https://doi.org/10.1080/00218464.2018.1557054; oder Hintze, W.; Hartmann, D.; Schubert, U. "Stirnfräsen von CFK zur Fügeflächenherstellung und Reparaturvorbereitung". Z. wirtschaftlichen Fabrikbetrieb., Jun, 2012, 107, 462-466. DOI: 10.3139/104.110775).

Anders als beim Abrasiv-Wasserstrahlabtragen wird durch bei der vorliegenden Erfindung ein unerwünschter Feuchtigkeitseintrag in die geschädigte Bauteilzone vermieden. Außerdem erlaubt die Erfindung im Gegensatz zum Abrasiv-Wasserstrahlabtragen einen weitestgehend emissionsfreien Abtrag, d.h. die Umgebung wird nicht durch Abrasivpartikel und Abtragsprodukte verunreinigt.

Bisher konnte mit herkömmlichen Verfahren wie dem bekannten Einsatz von Vakuumsaugstrahlen nur dünnschichtig die Deckschicht von Faserverbünden mit Abtragraten von 0,2 mm³/s entfernt werden. Im Gegensatz hierzu wurde gefunden, dass mit der vorliegenden Erfindung ein automatischer und kontrollierter Prozess möglich ist, mit dem gleichmäßige und großflächige Faserverbund-Schichten bei Abtragtiefen sowohl im dünnschichtigen als auch im cm Bereich mit Abtragraten von 5 mm³/s und mehr entfernt werden können. Es können größere Bereiche somit schneller, gleichmäßig und homogen im mit einer Genauigkeit bis in den µm-Bereich entfernt werden und insbesondere auch großflächig Harz und Faser abgetragen werden. Ein entscheidender Vorteil zu bisherigen Abtragverfahren und dem dünnschichtigen Anschleifen besteht daher neben der lateralen Strahlbereichsanpassung insbesondere in der schnelleren und größeren Abtragungsrate und einem definierten Schäftungsverlauf mit höherer und definierter Tiefe der Abtragung. Unterschiedliche Verbundmaterialien und Geometrien können mit dem Verfahren bearbeitet werden. Die mögliche und bevorzugte Automatisierung verbessert zum im Vergleich zum manuellen Schleifen die Ergonomie, Sicherheit und die Prozesszeit. Ein weiterer wichtiger Vorteil der Erfindung ist, dass das abrasive Strahlmittel zusammen mit dem entstehenden FVK-Schleifstaub unmittelbar wieder abgesaugt wird, so dass keine Stäube wie bei klassischen Verfahren freigesetzt werden. Die Saugstrahleinheit arbeitet somit emissionsarm, es werden keine Kühlmittel oder Nachreinigungsschritte benötigt. Ein weiterer großer Vorteil der Erfindung beim Abtragen von Faserverbundschichten ist die Vermeidung von Delaminationen, da der Wirkmechanismus der Materialtrennung normal zur Oberfläche und nicht tangential erfolgt. Es werden auch nur vernachlässigbare mechanischen Spannungen am Bauteil aufgebracht und es entsteht keine thermische Belastung (wie z.B. beim Laserverfahren). Durch eine mit einem 2D-Sensor gestützte Tiefen- und Breitenkontrolle und deren Regulierung von abgetragenen Faserlagen kann insbesondere die Qualität während des Prozesses kontrolliert und gesichert werden, so dass Nacharbeitszeit eingespart wird. Das Vakuumsaugstrahlen bringt zudem beim Bearbeiten von Leichtbauoberflächen nur sehr geringe Kräfte auf das zu behandelnde Material auf, wodurch die Kraft-Verformungs-Problematik bei Reparaturtätigkeiten entfällt. Das Verfahren eignet sich zudem für diverse Fasern und Harzsysteme und im Gegensatz zum Laserabtragen auch auf leitfähigen Materialien.

Die Erfindung bietet insbesondere System- und Verfahrenslösung für den Repairbereich und damit für eine In-field Lösung. Als Anwendungsbereich wird insbesondere, aber nicht ausschließlich, die Montage von Faserverbundbauteilen in der Luftfahrtindustrie (vornehmlich Hersteller und Zulieferer) im Sektor Reparatur, vornehmlich Instandhaltungsbetriebe wie die Maintenance und Repair Operations von beispielsweise Lufthansa Technik. Die vorliegende Erfindung ist für eine in-field Bearbeitung und Reparatur an Faserverbundbauteilen geeignet, einschließlich der Bearbeitung von Faserverbund-Großstrukturen, wie sie im Flugzeugbau häufig vorzufinden sind. Des Weiteren lassen sich die im z.B. Luftfahrtbereich gesammelten Erfahrungen einfach auf Bearbeitungsprozesse auch an Rotorblättern in der Windenergie oder im Automobilbau anwenden. Das Verfahren kann direkt vor Ort einsetzbar sein und damit enorme Kosten und Zeit sparen. Als weiterer Anwendungsbereich kommt auch die Nacharbeit von Fertigungsfehlern an Bauteilen während der Produktion in Frage, bei der inline (in Rep-Shops und FAL) durch eine Nacharbeit in der Montage eine schnelle und saubere Bearbeitung ermöglicht wird.

In einer vorteilhaften Ausgestaltung eines Aspekts der Erfindung liegt das Druckgefälle in einem Bereich von 200 bis 500 hPa, vorzugweise im Bereich von 275 bis 350 hPa. Es wurde gefunden, dass mit einem Druckgefälle in diesem Bereich jeweils gute Ergebnisse erzielt werden können.

In einer anderen vorteilhaften Ausgestaltung eines Aspekts der Erfindung wird das Druckgefälle so bereitgestellt, dass im Arbeitsraum ein Unterdruck gegenüber einer umgebenden Atmosphäre vorliegt. In dieser Ausgestaltung entspricht die Erfindung im Grunde dem Ansatz des Vakuumsaugstrahlens, wobei hierbei das Druckgefälle einfach durch eine entsprechende Saugeinheit gegenüber der Umgebungsluft erreicht werden kann.

In einer anderen vorteilhaften Ausgestaltung eines Aspekts der Erfindung ist die Abtrageeinheit so ausgestaltet, dass der Arbeitsraum eine Zufuhr von Transportgas und/oder Luft zwischen der Abtrageeinheit und dem Faserverbundwerkstück aufweist, wobei die Zufuhr vorzugsweise einen Spalt zwischen der Abtrageeinheit und dem Faserverbundwerkstück mit einer Breite in einem Bereich von 1/4 bis 1/20 des Abstands des Strahlrohrs zum Faserverbundwerkstück umfasst, insbesondere bevorzugt mit einer Breite von weniger als 0,5 mm. Es wurde gefunden, dass eine entsprechende zusätzliche Zufuhr von Luft bzw. Transportgas zwar einerseits das Druckgefälle als solches beeinflusst, wobei allerdings durch die zusätzliche Strömung eine bessere Abfuhr von Material erreicht wird.

In einer anderen vorteilhaften Ausgestaltung eines Aspekts der Erfindung weist das Strahlmaterial eine spratzige Kornform auf. Die mehr oder weniger stark ausgeprägte Unregelmäßigkeit zusammen mit scharfen Kanten des spratzigen Materials hat eine positive Wirkung auf die Abtragsfähigkeit des Strahlmaterials.

In einer anderen vorteilhaften Ausgestaltung eines Aspekts der Erfindung umfasst das Strahlmaterial ein Keramikmaterial mit einer Mohs-Härte im Bereich von 6 bis 7,5, Siliciumdioxid und/oder Glasbruch. Es wurde gefunden, dass mit derartigem Strahlmaterial gute Eigenschaften erreicht werden können.

In einer anderen vorteilhaften Ausgestaltung eines Aspekts der Erfindung weist das Strahlmaterial eine mittlere Korngröße von 200 bis 325 µm auf. Der hier angegebene Bereich für die mittlere Korngröße wird besonders bevorzugt.

In einer anderen vorteilhaften Ausgestaltung eines Aspekts der Erfindung erfolgt das Beschleunigen des Strahlmaterials mit einem Massendurchsatz im Bereich von 120 bis 200 g/min, vorzugsweise im Bereich von 140 bis 160 g/min. Mit einem derartigen Massendurchsatz lassen sich gute Abtragswirkungen zusammen mit einer wirtschaftlichen Nutzung des Strahlmaterials erreichen.

In einer anderen vorteilhaften Ausgestaltung eines Aspekts der Erfindung trifft das Strahlmaterial beim Abtragen in einem Winkel von 40° oder weniger zu einer jeweiligen Oberflächennormalen des Faserverbundwerkstücks auf das Faserverbundwerkstück, vorzugsweise in einem Winkel von 25° oder weniger, besonders bevorzugt in einem Winkel von 5° oder weniger, wobei die jeweilige Oberflächennormale eine gemittelte Oberflächennormale eines Bereichs um einen Auftreffpunkt mit einem Durchmesser ist, der wenigstens 10 mal größer als die mittlere Korngröße des Strahlmaterials ist. Auch wenn ein annähernd senkrechtes Auftreffen des Strahlmaterials bevorzugt ist, wurde gefunden, dass auch bei Abweichungen von der Normalen noch gute Ergebnisse zu erreichen sind. Aufgrund der durch den Materialabtrag und möglichweise schon durch das Faserverbundwerkstück selbst bedingten Rauigkeit der Oberfläche ist die Oberflächennormale nicht im mikroskopischen Bereich oder noch feineren Bereich zu betrachten.

In einer anderen vorteilhaften Ausgestaltung eines Aspekts der Erfindung weist das Strahlrohr eine Düse mit einem runden oder rechteckigen Düsenausgang auf, vorzugsweise mit einem Innendurchmesser von weniger als 50 mm, bevorzugt im Bereich von 10 bis 15 mm.

In einer anderen vorteilhaften Ausgestaltung eines Aspekts der Erfindung ist die Düse des Strahlrohrs eine Venturi-Düse mit einem Verengungsbereich, dessen Innendurchmesser im Bereich von 50 bis 75% des Düsenausgangs liegt.

In einer anderen vorteilhaften Ausgestaltung eines Aspekts der Erfindung wird die Abtrageeinheit gegenüber dem Faserverbundwerkstück lateral mit einer Geschwindigkeit im Bereich von 1 bis 10 mm/s bewegt, vorzugsweise im Bereich von 3 bis 5 mm/s. Es wurde gefunden, dass mit einer derartigen Bewegungsgeschwindigkeit der Abtrageeinheit und damit des Bereichs, in dem Material abgetragen wird, gute Ergebnisse erzielt werden können.

In einer anderen vorteilhaften Ausgestaltung eines Aspekts der Erfindung wird die Abtrageeinheit gegenüber dem Faserverbundwerkstück lateral derart bewegt, dass eine Überlappung von benachbarten Abtragespuren mit einer Breite im Bereich von 5 bis 10 % einer Spurbreite erreicht wird. Der Abtrag in den Abtragespuren ist im Randbereich im Allgemeinen etwas geringer, so dass mit einem entsprechenden Überlapp eine insgesamt gute Gleichmäßigkeit erreicht werden kann.

In einer anderen vorteilhaften Ausgestaltung eines Aspekts der Erfindung wird der Abstand des Strahlrohrs gegenüber dem Faserverbundwerkstück entsprechend einem lokalen Abtragsmaß angepasst. Angesichts der Bedeutung des Abstandes des Strahlrohrs von der Oberfläche kann es - in Abhängigkeit von der lokal gerade vorliegenden Tiefe - von Vorteil sein, die Position des Strahlrohrs gegenüber der Oberfläche (bzw. gegenüber dem "Grund" des Abtragsbereichs) anzupassen. Dies betrifft unter anderem die Erzeugung eines gleichmäßigen Abtrags über die gesamte Bahnlänge und die Vermeidung von Mehrabtrag am Bahnende bei Bewegungs-Stopp/Totzeiten. Beim Erreichen des Endpunkts der Abtragbahn verhindert nach Abschaltung der Strahlgutförderung das Hochfahren der Strahldüse einen höheren Abtrag am Haltepunkt des Strahlendeffektors durch das verzögert abgesaugte Reststrahlmittel. Dies erfolgt vorzugsweise ca. 0,5 s nach Erreichen des Endpunkts abrupt auf eine bestimmte Höhe, z.B. vom ca. 60 mm, um noch gleichmäßig, aber nicht zu viel abzutragen. Das Strahlrohr wird dabei vorzugsweise automatisch durch Hub und Federanschlag hochgefahren.

In einer anderen vorteilhaften Ausgestaltung eines Aspekts der Erfindung wird das erfindungsgemäße Materialabtragen als schäftendes Materialabtragen in einem Verfahren zur Reparatur eines Faserverbundwerkstücks mit Fasern und Harz, das zudem auch ein anschließendes Laminieren oder Kleben eines Reparaturstücks mit dem Faserverbundwerkstück im Bereich des Materialabtrags umfasst.

In einer anderen vorteilhaften Ausgestaltung eines Aspekts der Erfindung umfasst die erfindungsgemäße Vorrichtung wenigstens eine Sensoreinheit zur Erfassung eines Abtragsergebnisses und eine Steuereinheit, die zur Steuerung der Vorrichtung auf Basis eines Erfassungsergebnisses der Sensoreinheit ausgestaltet ist.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus den obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: schematische Darstellungen der Einwirkungen bei einem Strahlverfahren und einem Zerspanungsverfahren an einem Verbundwerkstoff,
- Fig. 2: eine schematische Darstellung einer mobilen, manuell geführten Strahleinheit,
- Fig. 3: eine schematische Darstellung einer Vakuumsaugstrahleinheit mit einer Anbindung an einen Roboter,
- Fig. 4: eine schematische Darstellung zur Illustration eines Ausführungsbeispiels der Erfindung,
- Fig. 5: eine schematische Darstellung zur weiteren Illustration des Ausführungsbeispiels,
- Fig. 6: Beispiele für typische Schäftungsvarianten,
- Fig. 7: schematische Darstellungen zur Erläuterung eines Bahnverlaufs bei einer Stufenschäftung,
- Fig. 8: schematische Darstellungen von Sollschäftungsgeometrien und jeweiligen Schäden,
- Fig. 9: eine schematische Draufsicht eines erfindungsgemäßen Abtragsystems mit einer kontinuierlichen Messung,
- Fig. 10: ein Ablaufdiagramm einer Ausgestaltung des erfindungsgemäßen Verfahrens.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

Fig. 1 zeigt schematische Darstellungen der Einwirkungen bei einem Strahlverfahren und einem Zerspanungsverfahren an einem Verbundwerkstoff 1. Bei einem Strahlverfahren, etwa dem erfindungsgemäßen Verfahren, ergibt sich aus der primär normalen Wirkbewegung des Strahlmittels 2 (dargestellt durch den Pfeil 4) eine entsprechende Normalspannung und ein senkrecht auf das Werkstück 1 gerichteter Abtrag. Im Gegensatz dazu tritt beim Zerspanen mit einer Schneide 3 eine primär tangentiale Wirkbewegung (dargestellt durch den Pfeil 5) und eine Schubspannung auf, wobei es hier zu Schädigungen 6 kommt.

Fig. 2 zeigt eine schematische Darstellung einer mobilen, manuell geführten Strahleinheit, wie sie im Grunde schon aus dem Stand der Technik bekannt ist. Die Strahleinheit umfasst eine Strahldüseneinheit 11 oder 12, die einerseits mit einer Materialzuführung 13 und andererseits mit einem Industriesauger 14 gekoppelt ist. Durch den vom Industriesauger 14 bewirkten Unterdruck wird aus der Materialzuführung 13 Strahlmaterial abgesaugt und zur Strahldüseneinheit 12 befördert, wo das Strahlmaterial auf die zu bearbeitende Oberfläche trifft und dann durch den Unterdruck des Industriesauger 14 zusammen mit abgetragenem Material abgeführt wird.

Fig. 3 zeigt eine schematische Darstellung einer Vakuumsaugstrahleinheit mit einer Anbindung an einen Roboter. Ähnlich zur Strahleinheit aus Fig. 2 wird Strahlmaterial von einer Bereitstellung 15 von Strahlmaterial zu einem von einem Roboter 16 gehaltenen Strahlkopf 17 geführt, um dort auf das Werkstück 16 geleitet zu werden.

Während beim Sandstrahlen Material mit einem Druck von typischerweise 6 bar auf die Oberfläche beschleunigt wird, erfolgt dies beim Vakuumsaugstrahlen herkömmlich mit ca. 0,2 bar.

Nach dem Auftreffen auf das Werkstück 18 wird das Strahlmaterial durch den Unterdruck des Vakuumsaugers 19 zusammen mit aus dem Werkstück 18 gelösten bzw. davon abgetragenen Material abgefördert.

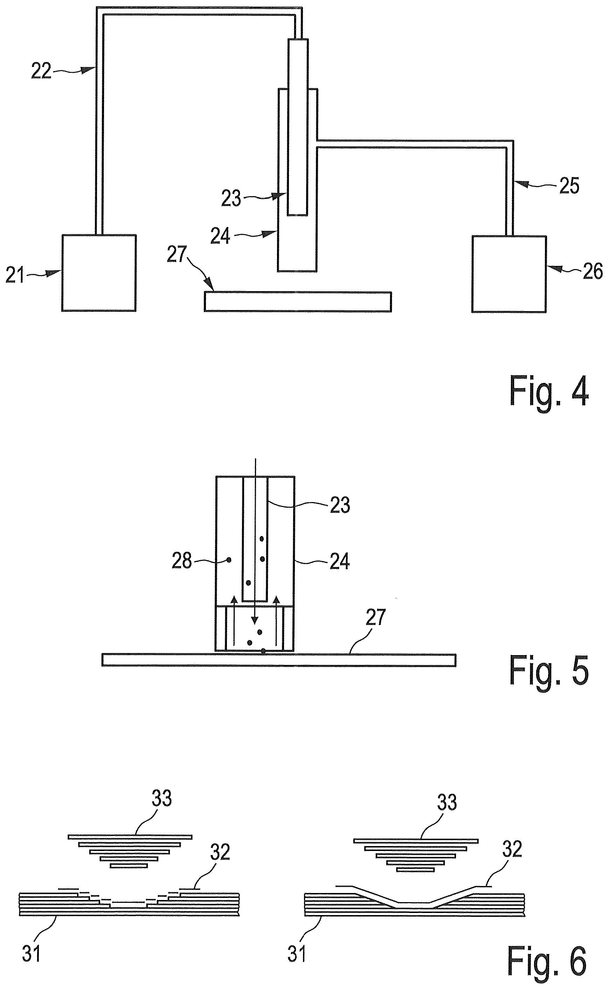

Fig. 4 zeigt eine schematische Darstellung zur Illustration eines Ausführungsbeispiels der Erfindung, wobei eine Vakuumsaugstrahleinheit dargestellt wird.

Die Vakuumsaugstrahleinheit umfasst einen Strahlmittelbehälter 21, der als Materialzufuhr zum Bereitstellen von Strahlmaterial dient, einen Zuführschlauch 22, ein Strahlrohr 23, ein Absaugrohr 24, ein Absaugschlauch 25 und einen Sauger 26, der als Druckeinheit zum Bereitstellen eines Druckgefälles dient. Das Strahlrohr 23 und das Absaugrohr 24 bilden in ihrer Gesamteinheit eine Abtrageinheit zum Abtragen von Material von einer zu bearbeitenden Oberfläche 27 bzw. von einem Werkstück. Die jeweiligen Abstände des Strahlrohrs 23 und des Absaugrohrs 24 zur Oberfläche 27 sind weder zueinander noch zu den Abmessungen der Rohrer 23, 24 maßstäblich.

Fig. 5 zeigt eine schematische Darstellung zur weiteren Illustration des Ausführungsbeispiels. Hierbei sind nur das Strahlrohr 23, das Absaugrohr 24 und die Werkstückoberfläche 27 illustriert. Durch das Strahlrohr 23 hindurch wird Strahlmaterial 28 auf die Oberfläche 27 geleitet, was durch den in der Zeichnung nach unten gerichteten Pfeil dargestellt ist. Das Strahlmaterial 28 trifft hierbei auf die Oberfläche 27 und trägt dort Material ab. Infolge des herrschenden Druckgefälles wird Strahlmaterial 28 und abgetragenes Material aus dem Werkstück durch den Bereich zwischen dem Absaugrohr 24 und dem Strahlrohr 23 hindurch abgeführt.

Wenn, wie hier schematisch angedeutet, zwischen dem Ende des Absaugrohrs 24 und der Oberfläche ein geringer Spalt besteht, kann hier Luft eintreten, wobei der entsprechende Luftstrom den Abtransport des Strahlmaterials und des abgetragenen Materials unterstützt. Es ist allerdings zu beachten, dass der Abstand hierbei klein (z.B. geringer als 0,5 mm, bevorzugt deutlich geringer) gehalten werden sollte, da sich ein übermäßiger Lufteintritt sonst negativ auf das Druckgefälle zum Sauger 26 auswirkt und den Abtransport des Strahlmaterials dann behindert oder gar verhindert.

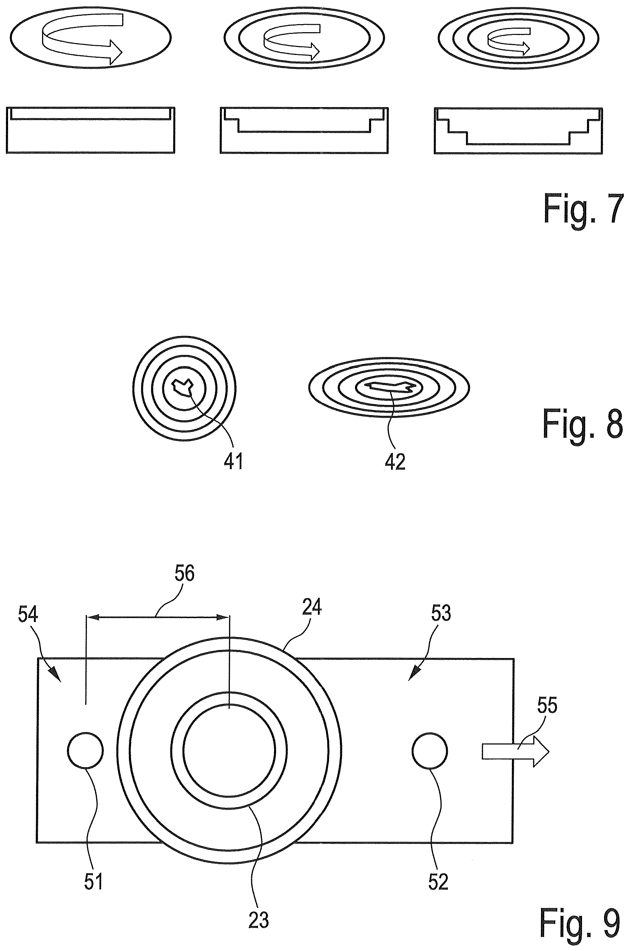

Fig. 6 zeigt Beispiele für typische Schäftungsvarianten. Der linke Teil von Fig. 7 zeigt eine Stufenabtragung, bei der im Schäfungsbereich des Werkstücks 31 Stufen vorliegen, während bei einer Abtragung mit Übergang, die im rechten Teil illustriert ist, solche Stufen nicht vorliegen. Zwischen einem Patch 33 und dem Werkstück 31 wird typischerweise ein Klebstoff 32 vorgesehen.

Fig. 7 zeigt schematische Darstellungen zur Erläuterung eines Bahnverlaufs bei einer Stufenschäftung.

Beim automatisierten Abtragverlauf des stufigen Schäftens, wie er in Fig. 7 illustriert ist, wird zunächst die erste Lage der gesamten Schäftungsfläche abgetragen (siehe linker Teil von Fig. 7), danach der um eine Stufenbreite kleinere Bereich (siehe mittlerer und rechter Teil von Fig. 7). Die Geometrie der Behandlungsfläche richtet sich nach der Geometrie des Schadens. Runde oder ovale Schäftungsverläufe können im Randbereich der Stufen einfacher und präziser hergestellt werden als rechteckige Verläufe. Der obere Teil von Fig. 7 deutet die Bewegungsrichtung und die Form des Schäftungsverlaufs in Aufsicht an, der untere Teil gibt eine schematische Querschnittsansicht wieder.

Im Rahmen der Erfindung kann hierbei ein abrasiver Strom von vorzugsweise Siliziumoxid-Strahlmittel verwendet werden, um auf die Faserverbundoberflächen zu strahlen und eine Schicht-zu-Schicht-Entfernung von Faserverbundstrukturen und Laminaten zu erreichen.

Fig. 8 zeigt schematische Darstellungen von Sollschäftungsgeometrien und jeweiligen Schäden. Bei einem eher punktförmigen Schaden 41 weist die entsprechende Schäftungsgeometrie eine im Wesentlichen runde Form auf, wie es im linken Teil von Fig. 8 gezeigt ist. Bei einem länglichen Schaden 42, wie er im rechten Teil von Fig. 8 gezeigt ist, wird vorzugsweise eine eher ovale Schäftungsgeometrie vorgesehen.

Fig. 9 zeigt eine schematische Draufsicht eines erfindungsgemäßen Abtragsystems mit einer kontinuierlichen Messung.

Im Rahmen der vorliegenden Erfindung ist eine Prozessregelung zur kontrollierten Abtragung vorgesehen. Der globale Ort und die Art der Schadensgeometrie werden vor Prozessbeginn als bekannt vorausgesetzt, wobei die Methoden der Schadensdetektion bereits dem Stand der Technik entsprechen.

Mit Hilfe eines Roboterendeffektors wird der Strahlkopf (mit Strahlrohr 23 und Außenrohr 24) positioniert. Der lokale Startpunkt der Schäftung wird mit Hilfe einer vorgeschalteten Sensorik (z.B. einem 2D Linienscanner) ermittelt, um dann den programmierten Weg abzufahren. Die Bewegungsrichtung des Strahlkopfes über die Oberfläche (zunächst die zu bearbeitende Oberfläche 53) wird durch den Pfeil 55 angedeutet.

Für eine kontinuierliche Kontrolle des Strahlabtrags wird eine dem Strahlkopf nachgelagerte optische 2D-Liniensensorik 51 mit einer Auflösung von 2 µm eingesetzt. Diese erkennt Lagentiefen von mindestens 0,05 mm in einer Messbreite von 25 mm. Die erreichte Strahltiefe und -breite wird überprüft und notfalls korrigiert, um während des Prozesses auf Änderungen des Strahlabtrags im 2 ms Bereich reagieren zu können. Über ein echtzeitfähiges Programm in der Steuerung werden die Roboterbewegungen und Strahlparameter angepasst. Über einen Algorithmus wird der Prozess korrigiert, falls eine Lage noch abgetragen werden muss. Es wird direkt hinter der Strahlaußendüse der normale Abstand zur Oberfläche gemessen. Ebenso kann bei Unterbrechung des Strahlvorgangs der Strahlkopf verfahren werden und die abgetragene Oberfläche 54 anschließend gemessen werden. Eine kontinuierliche nachlaufende Messung ist die zeitsparendste Variante, da direkt während der Fahrt gemessen werden kann und keine zusätzliche Kontrollfahrt nötig ist. Da der Messpunkt des Sensors außerhalb des Strahlkopfes liegt, wird der Abstand 56 des Messpunkts zur Wirkstelle durch ein dünnwandiges Außenrohr 24 (ca. 1 mm) geringgehalten, um eine schnelle Korrektur des Abtrags zu ermöglichen (z.B. wenn die Tiefe nicht erreicht wird, wodurch die Bewegung und Geschwindigkeit des Strahlkopfes im Programm automatisch angepasst wird). Als Referenz wird ein vorlaufender Sensor 52 vorgesehen.

Anders als beim bekannten Ansatz des Vakuumsaugstrahlverfahrens, das lediglich zur oberflächlichen Vorbehandlung von Faserverbundwerkstücken vorgesehen ist, bei der nur die Matrix der Decklage, aber nicht die Fasern abgetragen werden sollen, zielt das erfindungsgemäße Verfahren darauf ab, insbesondere auch die Fasern und diese über eine größere Tiefe des Bauteils abzutragen.

Eine beispielhafte Ausgestaltung der Erfindung wird im Folgenden erläutert.

Über einen Absaugkanal, der zur Bauteiloberfläche abgedichtet oder weitgehend abgedichtet ist, wird über einen Zufuhrkanal ein Gemisch aus Luft und Abrasivpartikeln angesaugt. Hierbei hat der Zufuhrkanal im Gegensatz zum Absaugkanal einen Abstand zur Bauteiloberfläche (siehe Fig. 5). Die Abrasivpartikel bewirken durch einzelne Stöße auf die Oberfläche einen Materialabtrag durch einen Teil ihrer kinetischen Energie. Die Partikel werden infolge der Restenergie von der Bauteiloberfläche reflektiert und gelangen unterstützt durch den Unterdruck (Vakuum) in den Absaugkanal.

Die entsprechende Vorrichtung umfasst (vgl. auch Fig. 2 und 3) einen Strahlmittelbehälter, einen Zuführschlauch, ein Strahlrohr, ein Absaugrohr, einen Absaugschlauch und einen Vakuumsauger.

Bei der vorliegenden Ausgestaltung werden Partikel vorzugsweise einer spratzigen Kornform, d.h. mit scharfkantigen Teilflächen, vorzugsweise einer Keramik hoher Härte, weiter vorzugsweise aus SiO2, vorzugsweise als Glasbruch eingesetzt, wobei deren Dichte geringer als 3.2 g/cm³, vorzugsweise geringer als 2.7 g/cm³, speziell etwa 2.5 g/cm³ beträgt, und deren mittlerer Korndurchmesser mindestens 200 µm, vorzugsweise mindestens 250µm beträgt, wobei der erzeugte Unterdruck in der Strahlhaube an der Wirkstelle zwischen 200 hPa und 500 hPa, vorzugsweise zwischen 280 hPa bis 330 hPa beträgt, wobei der Abstand des Zufuhrkanals (Strahlrohrs) zur Wirkstelle auf der Bauteiloberfläche 4 bis 11 mm, vorzugsweise 6 bis 9 mm, speziell 7 bis 8 mm beträgt.

Das erfindungsgemäße Wirkprinzip beruht auf einem energiegebundenen Abtrag durch einen gasgeführten Partikelstrahl mit einer vorrangig normalen Wirkrichtung, die einen Winkel von maximal 40° zur Oberflächennormalen, vorzugsweise von maximal 25° zur Oberflächennormalen aufweist, speziell mit einer etwa normalen Wirkrichtung zur Werkstückoberfläche (siehe Fig. 1). Der Abtragmechanismus beruht darauf, dass die einzelnen Strahlkörner durch ihre kinetische Energie den abzutrennenden Werkstoff oberflächlich in einem lokal äußerst begrenzten Bereich punktförmig primär auf Druck belasten. Die Spannungskonzentration führt im Falle spröder Werkstoffe wie z.B. Kohle- und Glasfasern zum Sprödbruch. Im Falle duktiler Werkstoffe, wie z.B. Harzmatrix und Kupfermesh zum Blitzschutz, führen wiederholte Stöße der Strahlmittelkörner zum lokalen Ermüden des behandelten Werkstoffbereichs und schließlich zum oberflächlichen Herauslösen einzelner Partikel. Tieferliegende Faser- bzw. Laminatschichten werden somit nicht geschädigt (siehe Fig.1).

Die Erfindung implementiert den Vakuumsaugstrahlprozess für den gezielten großflächigen Abtrag in Breite und Tiefe an Faserverbund-Bauteilen. Der Abtrag umfasst dabei Fasern und Matrix. Das Verfahren mittels Vakuumsaugstrahlen ist ein neuartiger Ansatz für das präzise Entfernen von Schadstellen an Faserverbundbauteilen mittels Schäftung. Die Automatisierung dieses Verfahrens eignet sich damit als Technologielösung für die Reparatur von Faserverbundbauteilen in der Industrie. Der Prozess deckt verschiedene Reparaturstellengrößen und -tiefen ab. Es kann eine an die Schadenfläche angepasste Abtragsgeometrie erzeugt werden, wobei vor allem grundlegende Schäftungsverläufe im Maßstab einer typischen Schäftungsstelle von ca. 300 mm x 300 mm hergestellt werden. Diese Größe deckt ca. 90% der Schäden in der Industrie ab.

Dazu werden Sollschäftungsgeometrien erstellt und mittels CAM Routinen zum Taschenfräsen ausgeführt (siehe Fig. 6). Bei Reparaturen im Luftfahrtbereich werden üblicherweise materialabhängige Angaben zur Lagenstärke herangezogen, um den Prozess und die Prozessparameter auf das jeweilige Material hin anzupassen. Typische Materialstärken von Faserverbund-Bauteilen (z.B. Rumpfschalen) in der Luftfahrt liegen bei ca. 1 mm bis 25 mm mit Einzellagen von ca. 0,15 mm. Es wird ein stufenweiser Abtrag bevorzugt, dessen Stufenbreiten in Abhängigkeit zur Schadentiefe stehen.

Beispielhaft umfasst ein Vorgehen zum Abtragen eine Programmauswahl für den jeweiligen Abtragvorgang, ein Positionieren des Strahlkopfes vom Roboter an der Oberfläche, ein Einschalten des Industriesaugers über einen Programmbefehl des Roboterprogramms, ein Starten der Strahlmittelzufuhr über ein Signal im Programm, ein Verfahren des Strahlkopfes auf der Werkstückoberfläche und eine Kontrolle der Abtragtiefe und -breite durch eine Sensorik und eine entsprechende Regelung die Programmparameter, wobei das Programm bis zum Ende des Strahlvorgangs durchläuft.

Eine Ausgestaltung des erfindungsgemäßen Verfahrens ist eine trockene Bearbeitung durch ein mittels Unterdruck im Strahlrohr befördertes abrasives Strahlmedium im Transportgas, abgeschlossen zur Bearbeitungsoberfläche durch ein Außenrohr, welches einen kontrolliert geringen Spalt für eine den Strahlmittelstrom beschleunigende Zuluft beinhaltet. Das Verfahren ist dadurch ausgezeichnet, dass zum volumetrischen Abtragen an Faserharzlaminaten die Anordnung des Strahlrohrs, der Druckbereich, der Massenstrom und die Korngrößen als Hauptparameter passend eingestellt werden. Der einzustellende Unterdruck liegt zwischen 200 hPa und 500 hPa liegen, vorzugsweise bei 300 hPa. Der zum Abtragen gewünschte Massendurchsatz kann insbesondere zwischen 120 g/min und 200 g/min eingestellt werden, bevorzugt bei 150 g/min. Korngrößen sind zwischen 200 µm und 500 µm vorgesehen, zu bevorzugen ist ein Glasbruch- Strahlmittel mit Korngröße 315 µm.

Es wurde gefunden, dass bei der entsprechende Vorrichtung Einstellmöglichkeiten hinsichtlich insbesondere von Strahlrohrgeometrien vorliegen. Einsetzbar für den Abtrag sind insbesondere die verwendeten Strahldüsengeometrien aus Runddüsen, bevorzugt Venturi-Düsen (Durchmesser Venturi min. 8 mm, Austritt 13,5 mm bis max. 20 mm). Innenrohrdurchmesser können abhängig vom Schlauchdurchmesser bis zu 50 mm betragen, bevorzugt bei 10 mm bis 15 mm, um z.B. eine optimale und effiziente Bearbeitungsbreite von 20 mm zu ermöglichen. Es können Düsen mit rundem oder Rechteck-Ausgang eingesetzt werden. Ein Strahlrohrabstand von 3 mm bis 10 mm zur Oberfläche ist möglich, vorzugsweise sind 7-8 mm einzustellen. Die Verfahrgeschwindigkeit bei den zuvor genannten bevorzugten Werten sollte zwischen 1 mm/s und 9 mm/s, vorzugsweise bei 4 mm/s liegen. Für einen lückenlosen Übergang zwischen zwei Abtragspuren ist eine Bahnüberlappungsbreite von 1 mm bis 2 mm einzustellen. Mittels eines an verschiedene Bauteilgeometrien anpassbaren, flexiblen Dichtungsmaterials wird der Abschluss des Strahlkopfs zum Bauteil hergestellt und damit der nötige Unterdruck von geschaffen, um die Reparaturstelle von der Umgebung zu separieren.

In einem konkreteren Ausführungsbeispiel wird als Anforderung vor einer CFK Platte mit 300 mm x 300 mm, einer Lagenstärke von 0,125 mm und einer Deckschicht 0,06 mm ausgegangen, wobei eine Bearbeitungsbreite mit Stufen von 20 mm und ein Abtrag dreier Lagen vorgesehen sind.

Beim automatisierten Abtragverlauf des stufigen Schäftens wird zunächst die erste Lage der gesamten Schäftungsfläche abgetragen, danach der um eine Stufenbreite kleinere Bereich. Bei CFK-Bauteilen mit einer Deckschicht wird zunächst diese abgetragen, hierfür wird eine separate Geschwindigkeit gewählt, da die Lage dünner ist.

Ein Ausgangszustand umfasst beispielsweise einen Industrieroboter mit Saugstrahlendeffektor und Strahlmittelbehälter auf einem Tenderwagen, eine Schlauchführung verbunden mit Industriesauger, Schläuche 45 mm, Absaugschlauch 30 m, 13 mm Strahlschlauch 10 m, wobei Strahlrohrgeometrien aus Rund-Venturi-Düsen (Durchmesser Venturi min. 8 mm, Austritt 13,5 mm bis max. 20 mm) vorgesehen sind.

Der Ablauf umfasst hierbei, dass die Platte auf einem ebenen Tisch fest aufgespannt wird. Zwei Hebel am Industriesauger werden auf Unterdruck-Maximum (ca. 300 hPa) gestellt. Der Strahlmittelbehälter wird mit Strahlgut GB 315 gefüllt und das Innenrohr der Strahldüse wird auf einen Abstand von 7 mm zur Oberfläche eingestellt. Es erfolgt eine Programmauswahl für den jeweiligen Abtragvorgang und der Strahlkopf wird vom Roboter an der Oberfläche positioniert, wobei dies eine Fahrt zur ersten Position mit einem Abstand der Außendüse von 1 mm zur Oberfläche umfasst, wobei eine flexible Dichtung in Kontakt zur Oberfläche vorgesehen ist.

Über einen Programmbefehl schaltet das Roboterprogramm den Industriesauger ein, so dass es zum Start der Absaugung kommt. Hierbei beträgt die Fördermenge etwa 60 % (150 g/min). Anschließend wird die Strahlmittelzufuhr über ein Signal im Programm gestartet, also die Förderung gestartet. Zur Entfernung der Deckschicht im gewünschten Bereich ist eine Roboterbewegung mit 8 mm/s vorgesehen, wobei für die restlichen Lagen eine Roboterbewegung von 4 mm/s eingestellt wird. Bei der Fahrt beträgt der Abstand der Bahnmittelpunkte 13 mm (Bahnüberlappungsbreite von 1 mm bis 2 mm). Der Strahlkopf wird auf der Werkstückoberfläche mit einprogrammierten Wegen verfahren. Die Sensorik kontrolliert die Abtragtiefe und -breite und regelt die Programmparameter, bis der Strahlvorgang abgeschlossen ist. Zur Vermeidung von Mehrabtrag am Bahnende bei Bewegungs-Stopp/Totzeiten wird beim Erreichen des Endpunkts der Abtragbahn nach Abschaltung der Strahlgutförderung vorzugsweise das Hochfahren der Strahldüse ca. 0,5 s nach Erreichen des Endpunkts abrupt auf eine bestimmte Höhe ausgelöst, um noch gleichmäßig, aber nicht zu viel abzutragen. Das Strahlrohr wird dabei vorzugsweise automatisch durch Hub und Federanschlag hochgefahren. Weitere Möglichkeiten sind hier das Hochfahren des gesamten Endeffektors, um den Strahlprozess zu unterbrechen, das Schalten eines Ventils am Strahlausgang, um den Durchgang zur Oberfläche zu schließen oder der vorzeitige Stopp der Strahlgutförderung während der Bewegung.

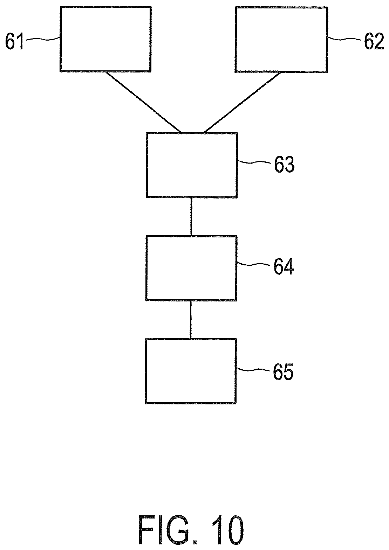

Fig. 10 zeigt ein Ablaufdiagramm einer Ausgestaltung des erfindungsgemäßen Verfahrens.

Das Verfahren dient zum Materialabtrag an einem Faserverbundwerkstück mit Fasern und Harz.

In Schritt 61 wird ein Druckgefälle in einem Transportgas bereitgestellt. In Schritt 62 wird ein Strahlmaterial bereitgestellt. Die Schritte 61 und 62 sind hier parallel dargestellt, können allerdings auch aufeinanderfolgend oder nur teilweise überlappend vorgesehen sein.

Infolge des Druckgefälles wird in Schritt 63 wird Strahlmaterials auf eine Oberfläche des Faserverbundwerkstücks hin beschleunigt, so dass es in Schritt 64 zu einem abrasiven Abtragen von Material einschließlich Fasern und Harz aus dem Faserverbundwerkstück in einem durch eine Abtrageeinheit und das Faserverbundwerkstück bestimmten Arbeitsraum kommt. In Schritt 65 wird abgetragenes Material und Strahlmaterial aus dem Arbeitsraum durch das Druckgefälle abgeführt.

Erfindungsgemäß wird das Strahlmaterial durch ein Strahlrohr auf die Oberfläche des Faserverbundwerkstücks geleitet, wobei das Strahlmaterial eine mittlere Korngröße im Bereich von 200 µm bis 500 µm aufweist und ein Abstand des Strahlrohrs zum Faserverbundwerkstück im Arbeitsraum in einem Bereich von 3 bis 12 mm liegt.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutieren Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Verbundwerkstoff
- 2: Strahlmittel
- 3: Schneide
- 4: Wirkbewegung des Strahlmittels
- 5: Wirkbewegung der Schneide
- 6: Schädigungen
- 11, 12: Strahldüseneinheit
- 13: Materialzuführung
- 14: Industriesauger
- 15: Bereitstellung von Strahlmaterial
- 16: Roboter
- 17: Strahlkopf
- 18: Werkstück
- 19: Vakuumsauger
- 21: Strahlmittelbehälter
- 22: Zuführschlauch
- 23: Strahlrohr
- 24: Absaugrohr
- 25: Absaugschlauch
- 26: Sauger
- 27: Oberfläche
- 28: Strahlmaterial
- 31: Werkstück
- 32: Klebstoff
- 33: Patch
- 41: punktförmiger Schaden
- 42: länglicher Schaden
- 51: nachlaufender Sensor
- 52: vorlaufender Sensor
- 53: abzutragende Oberfläche
- 54: abgetragene Oberfläche
- 55: Bewegungsrichtung
- 56: Abstand
- 61: Bereitstellen eines Druckgefälles
- 62: Bereitstellen von Strahlmaterial
- 63: Beschleunigen von Strahlmaterial
- 64: Abrasives Abtragen
- 65: Abführen von Material

## Patentansprüche

1. Verfahren zum Materialabtrag an einem Faserverbundwerkstück (1, 31) mit Fasern und Harz, mit den Schritten:
Bereitstellen (61) eines Druckgefälles in einem Transportgas,
Bereitstellen (62) eines Strahlmaterials (28),
Beschleunigen (63) des Strahlmaterials (28) durch das Druckgefälle auf eine Oberfläche (27, 53) des Faserverbundwerkstücks (1, 31),
abrasives Abtragen (64) von Material einschließlich Fasern und Harz aus dem Faserverbundwerkstück (1, 31) in einem durch eine Abtrageeinheit (24) und das Faserverbundwerkstück (1, 31) bestimmten Arbeitsraum und
Abführen (65) von abgetragenem Material und Strahlmaterial (28) aus dem Arbeitsraum durch das Druckgefälle,
wobei das Strahlmaterial (28) durch ein Strahlrohr (23) auf die Oberfläche (27, 53) des Faserverbundwerkstücks (1, 31) geleitet wird,
**gekennzeichnet dadurch, dass**
das Strahlmaterial (28) eine mittlere Korngröße im Bereich von 200 µm bis 500 µm aufweist und
ein Abstand des Strahlrohrs (23) zum Faserverbundwerkstück (1, 31) im Arbeitsraum in einem Bereich von 3 bis 12 mm liegt.

2. Verfahren nach Anspruch 1,
wobei das Druckgefälle in einem Bereich von 200 bis 500 hPa liegt, vorzugweise im Bereich von 275 bis 350 hPa.

3. Verfahren nach einem der vorstehenden Ansprüche,
wobei das Druckgefälle so bereitgestellt wird, dass im Arbeitsraum ein Unterdruck gegenüber einer umgebenden Atmosphäre vorliegt.

4. Verfahren nach einem der vorstehenden Ansprüche,
wobei die Abtrageeinheit (24) so ausgestaltet ist, dass der Arbeitsraum eine Zufuhr von Transportgas und/oder Luft zwischen der Abtrageeinheit (24) und dem Faserverbundwerkstück (1, 31) aufweist, wobei die Zufuhr vorzugsweise einen Spalt zwischen der Abtrageeinheit (24) und dem Faserverbundwerkstück (1, 31) mit einer Breite in einem Bereich von 1/4 bis 1/20 des Abstands des Strahlrohrs (23) zum Faserverbundwerkstück (1, 31) umfasst, insbesondere bevorzugt mit einer Breite von weniger als 0,5 mm.

5. Verfahren nach einem der vorstehenden Ansprüche,
wobei das Strahlmaterial (28) eine spratzige Kornform aufweist.

6. Verfahren nach einem der vorstehenden Ansprüche,
wobei das Strahlmaterial (28) ein Keramikmaterial mit einer Mohs-Härte im Bereich von 6 bis 7,5, Siliciumdioxid und/oder Glasbruch umfasst.

7. Verfahren nach einem der vorstehenden Ansprüche,
wobei das Strahlmaterial (28) eine mittlere Korngröße von 200 bis 325 µm aufweist.

8. Verfahren nach einem der vorstehenden Ansprüche,
wobei das Beschleunigen (63) des Strahlmaterials (28) mit einem Massendurchsatz im Bereich von 120 bis 200 g/min erfolgt, vorzugsweise im Bereich von 140 bis 160 g/min.

9. Verfahren nach einem der vorstehenden Ansprüche,
wobei das Strahlmaterial (28) beim Abtragen (64) in einem Winkel von 40° oder weniger zu einer jeweiligen Oberflächennormalen des Faserverbundwerkstücks (1, 31) auf das Faserverbundwerkstück (1, 31) trifft, vorzugsweise in einem Winkel von 25° oder weniger, besonders bevorzugt in einem Winkel von 5° oder weniger, wobei die jeweilige Oberflächennormale eine gemittelte Oberflächennormale eines Bereichs um einen Auftreffpunkt mit einem Durchmesser ist, der wenigstens 10 mal größer als die mittlere Korngröße des Strahlmaterials (28) ist.

10. Verfahren nach einem der vorstehenden Ansprüche,
wobei die Abtrageeinheit (24) gegenüber dem Faserverbundwerkstück (1, 31) lateral mit einer Geschwindigkeit im Bereich von 1 bis 10 mm/s bewegt wird, vorzugsweise im Bereich von 3 bis 5 mm/s.

11. Verfahren nach einem der vorstehenden Ansprüche,
wobei die Abtrageeinheit (24) gegenüber dem Faserverbundwerkstück (1, 31) lateral derart bewegt wird, dass eine Überlappung von benachbarten Abtragespuren mit einer Breite im Bereich von 5 bis 10 % einer Spurbreite erreicht wird.

12. Verfahren nach einem der vorstehenden Ansprüche,
wobei der Abstand des Strahlrohrs (23) gegenüber dem Faserverbundwerkstück (1, 31) entsprechend einem lokalen Abtragsmaß angepasst wird.

13. Verfahren zur Reparatur eines Faserverbundwerkstücks (1, 31) mit Fasern und Harz, mit den Schritten:
schäftendes Materialabtragen (64) mit den Schritten des Verfahrens nach einem der vorstehenden Ansprüche,
Laminieren oder Kleben eines Reparaturstücks (33) mit dem Faserverbundwerkstück (1, 31) im Bereich des Materialabtrags.

14. Vorrichtung zum automatisierten Materialabtrag an einem Faserverbundwerkstück (1, 31) mit Fasern und Harz, mit:
einer Druckeinheit (26), die zum Bereitstellen eines Druckgefälles in einem Transportgas ausgestaltet ist,
einer Materialzufuhr (21), die zum Bereitstellen eines Strahlmaterials (28) ausgestaltet ist, und
einer Abtrageeinheit (24) mit einem Strahlrohr (23),
wobei die Vorrichtung dazu ausgestaltet ist, durch ein von der Druckeinheit (26) bereitgestelltes Druckgefälle das von der Materialzufuhr (21) bereitgestellte Strahlmaterial (28) auf eine Oberfläche (27, 53) des Faserverbundwerkstücks (1, 31) hin zu beschleunigen (63) und zu leiten, so dass ein abrasives Abtragen (64) von Material einschließlich Fasern und Harz aus dem Faserverbundwerkstück (1, 31) in einem durch eine Abtrageeinheit (24) und das Faserverbundwerkstück (1, 31) bestimmten Arbeitsraum bewirkt wird,
wobei die Vorrichtung ferner zum Abführen (65) von abgetragenem Material und Strahlmaterial (28) aus dem Arbeitsraum durch das Druckgefälle ausgestaltet ist,
**gekennzeichnet dadurch, dass**
das Strahlmaterial (28) eine mittlere Korngröße im Bereich von 200 µm bis 500 µm aufweist und
im Betrieb der Vorrichtung ein Abstand des Strahlrohrs (23) zum Faserverbundwerkstück (1, 31) im Arbeitsraum in einem Bereich von 3 bis 12 mm liegt.

15. Vorrichtung nach Anspruch 14,
ferner mit wenigstens einer Sensoreinheit (51, 52) zur Erfassung eines Abtragsergebnisses und einer Steuereinheit, die zur Steuerung der Vorrichtung auf Basis eines Erfassungsergebnisses der Sensoreinheit (51, 52) ausgestaltet ist.

## Claims

1. A method for removing a material from a fiber composite workpiece (1, 31) comprising fibers and resin, comprising the steps of:
providing (61) a pressure gradient in a transport gas,
providing (62) a blasting material (28),
accelerating (63) the blasting material (28) by means of the pressure gradient onto a surface (27, 53) of the fiber composite workpiece (1, 31),
abrasively removing (64) a material, including fibers and resin, from the fiber composite workpiece (1, 31) within a working space defined by a removal unit (24) and the fiber composite workpiece (1, 31) and
discharging (65) the removed material and blasting material (28) from the working space by means of the pressure gradient,
wherein the blasting material (28) is directed onto the surface (27, 53) of the fiber composite workpiece (1, 31) through a blasting pipe (23),
**characterized in that**
the blasting material (28) has an average grain size in a range from 200 µm to 500 µm and
a distance between the blasting pipe (23) and the fiber composite workpiece (1, 31) in the working space is in a range from 3 to 12 mm.

2. The method according to claim 1,
wherein the pressure gradient is in a range from 200 to 500 hPa, preferably in a range from 275 to 350 hPa.

3. The method according to any one of the preceding claims,
wherein the pressure gradient is provided such that a negative pressure compared to a surrounding atmosphere prevails in the working space.

4. The method according to any one of the preceding claims,
wherein the removal unit (24) is configured such that the working space has a supply of transport gas and/or air between the removal unit (24) and the fiber composite workpiece (1, 31), wherein the supply preferably comprises a gap between the removal unit (24) and the fiber composite workpiece (1, 31) having a width in a range from 1/4 to 1/20 of the distance between the blasting pipe (23) and the fiber composite workpiece (1, 31), in particular preferably having a width of less than 0.5 mm.

5. The method according to any one of the preceding claims,
wherein the blasting material (28) has a spiky grain shape.

6. The method according to any one of the preceding claims,
wherein the blasting material (28) comprises a ceramic material having a Mohs hardness in a range from 6 to 7.5, silicon dioxide and/or broken glass.

7. The method according to any one of the preceding claims,
wherein the blasting material (28) has an average grain size of 200 to 325 µm.

8. The method according to any one of the preceding claims,
wherein accelerating (63) of the blasting material (28) is carried out with a mass flow rate in a range from 120 to 200 g/min, preferably in a range from 140 to 160 g/min.

9. The method according to any one of the preceding claims,
wherein, during removing (64) the material, the blasting material (28) impinges on the fiber composite workpiece (1, 31) at an angle of 40° or less relative to a respective surface normal of the fiber composite workpiece (1, 31), preferably at an angle of 25° or less, particularly preferably at an angle of 5° or less, wherein the respective surface normal is an averaged surface normal of an area around an impact point having a diameter that is at least 10 times larger than the average grain size of the blasting material (28).

10. The method according to any one of the preceding claims,
wherein the removal unit (24) is moved laterally relative to the fiber composite workpiece (1, 31) at a speed in a range from 1 to 10 mm/s, preferably in a range from 3 to 5 mm/s.

11. The method according to any one of the preceding claims,
wherein the removal unit (24) is moved laterally relative to the fiber composite workpiece (1, 31) such that an overlap of adjacent removal tracks having a width in a range from 5 to 10% of a track width is achieved.

12. The method according to any one of the preceding claims,
wherein the distance of the blasting pipe (23) relative to the fiber composite workpiece (1, 31) is adapted in accordance with a local removal measure.

13. A method for repairing a fiber composite workpiece (1, 31) comprising fibers and resin, comprising the steps of:
removing material (64) in a tapering manner comprising the steps of the method according to any one of the preceding claims,
laminating or bonding a repair piece (33) to the fiber composite workpiece (1, 31) in an area of the material removal.

14. A device for automated material removal from a fiber composite workpiece (1, 31) comprising fibers and resin, comprising:
a pressure unit (26) configured to provide a pressure gradient in a transport gas,
a material supply (21) configured to provide a blasting material (28), and
a removal unit (24) having a blasting pipe (23),
wherein the device is configured to accelerate (63) and direct the blasting material (28) provided by the material supply (21) onto a surface (27, 53) of the fiber composite workpiece (1, 31) by means of the pressure gradient provided by the pressure unit (26), such that abrasively removing (64) a material, including fibers and resin, from the fiber composite workpiece (1, 31) is effected within a working space defined by a removal unit (24) and the fiber composite workpiece (1, 31),
wherein the device is further configured to discharge (65) removed material and blasting material (28) from the working space by means of the pressure gradient,
**characterized in that**
the blasting material (28) has an average grain size in a range from 200 µm to 500 µm, and
during operation of the device, a distance between the blasting pipe (23) and the fiber composite workpiece (1, 31) in the working space is in a range from 3 to 12 mm.

15. The device according to claim 14,
further comprising at least one sensor unit (51, 52) for detecting an removal result and a control unit which is configured to control the device based on a detection result of the sensor unit (51, 52).

## Revendications

1. Procédé d'enlèvement de matière sur une pièce composite en fibres (1, 31) avec des fibres et de la résine, avec les étapes :
de fourniture (61) d'une chute de pression dans un gaz de transport,
de fourniture (62) d'une matière de sablage (28),
d'accélération (63) de la matière de sablage (28) du fait de la chute de pression sur une surface (27, 53) de la pièce composite en fibres (1, 31),
d'enlèvement abrasif (64) de matière, y compris des fibres et de la résine, de la pièce composite en fibres (1, 31) dans un espace de travail défini par une unité d'enlèvement (24) et la pièce composite en fibres (1, 31) et
d'évacuation (65) de la matière enlevée et de la matière de sablage (28) hors de l'espace de travail par la chute de pression,
dans lequel la matière de sablage (28) est dirigée à travers un tuyau de sablage (23) sur la surface (27, 53) de la pièce composite en fibres (1, 31),
**caractérisé en ce que**
la matière de sablage (28) présente une taille de grain moyenne dans la plage de 200 µm à 500 µm et
une distance du tuyau de sablage (23) par rapport à la pièce composite en fibres (1, 31) dans la chambre de travail se situe dans une plage de 3 à 12 mm.

2. Procédé selon la revendication 1,
dans lequel la chute de pression se situe dans une plage de 200 à 500 hPa, de préférence dans la plage de 275 à 350 hPa.

3. Procédé selon l'une quelconque des revendications précédentes,
dans lequel la chute de pression est fournie de telle sorte qu'une dépression est présente dans l'espace de travail par rapport à l'atmosphère environnante.

4. Procédé selon l'une quelconque des revendications précédentes,
dans lequel l'unité d'enlèvement (24) est configurée de telle sorte que l'espace de travail présente une arrivée de gaz de transport et/ou d'air entre l'unité d'enlèvement (24) et la pièce composite en fibres (1, 31), dans lequel l'arrivée comprend de préférence une fente entre l'unité d'enlèvement (24) et la pièce composite en fibres (1, 31) d'une largeur dans une plage de 1/4 à 1/20 de la distance du tuyau de sablage (23) par rapport à la pièce composite en fibres (1, 31), en particulier de manière préférée avec une largeur inférieure à 0,5 mm.

5. Procédé selon l'une quelconque des revendications précédentes, dans lequel la matière de sablage (28) présente une forme granulaire épineuse.

6. Procédé selon l'une quelconque des revendications précédentes,
dans lequel la matière de sablage (28) comprend une matière céramique avec une dureté de Mohs dans la plage de 6 à 7,5, du dioxyde de silicium et/ou un bris de verre.

7. Procédé selon l'une quelconque des revendications précédentes,
dans lequel la matière de sablage (28) présente une taille de grain moyenne de 200 à 325 µm.

8. Procédé selon l'une quelconque des revendications précédentes,
dans lequel l'accélération (63) de la matière de sablage (28) se fait à un débit massique dans la plage de 120 à 200 g/min, de préférence dans la plage de 140 à 160 g/min.

9. Procédé selon l'une quelconque des revendications précédentes,
dans lequel, lors de l'enlèvement (64), la matière de sablage (28) heurte la pièce composite en fibres (1, 31) à un angle de 40° ou moins par rapport à la normale de surface respective de la pièce composite en fibres (1, 31), de préférence à un angle de 25° ou moins, et de manière particulièrement préférée à un angle de 5° ou moins, dans lequel la normale de surface respective est une normale de surface moyenne d'une zone autour d'un point d'impact avec un diamètre qui est au moins 10 fois plus grand que la taille de grain moyenne de la matière de sablage (28).

10. Procédé selon l'une quelconque des revendications précédentes,
dans lequel l'unité d'enlèvement (24) est déplacée latéralement par rapport à la pièce composite en fibres (1, 31) à une vitesse dans la plage de 1 à 10 mm/s, de préférence dans la plage de 3 à 5 mm/s.

11. Procédé selon l'une quelconque des revendications précédentes,
dans lequel l'unité d'enlèvement (24) est déplacée latéralement par rapport à la pièce composite en fibres (1, 31) de manière à obtenir un chevauchement des traces d'enlèvement adjacentes avec une largeur dans la plage de 5 et 10 % d'une largeur de trace.

12. Procédé selon l'une quelconque des revendications précédentes,
dans lequel la distance du tuyau de sablage (23) par rapport à la pièce composite en fibres (1, 31) est ajustée en fonction d'une mesure locale d'enlèvement de matière.

13. Procédé de réparation d'une pièce composite en fibres (1, 31) avec des fibres et de la résine, avec les étapes :
d'enlèvement de matière (64) par enture avec les étapes du procédé selon l'une quelconque des revendications précédentes,
de laminage ou de collage d'une pièce de réparation (33) avec la pièce composite en fibres (1, 31) dans la zone de l'enlèvement de matière.

14. Dispositif d'enlèvement de matière automatisé sur une pièce composite en fibres (1, 31) avec des fibres et de la résine, avec :
une unité de pression (26), qui est configurée pour fournir une chute de pression dans un gaz de transport,
une arrivée de matière (21), qui est configurée pour fournir une matière de sablage (28), et
une unité d'enlèvement (24) avec un tuyau de sablage (23),
dans lequel le dispositif est configuré pour accélérer (63) et diriger, par une chute de pression fournie par l'unité de pression (26), la matière de sablage (28) fournie par l'arrivée de matière (21) sur une surface (27, 53) de la pièce composite en fibres (1, 31), de telle sorte qu'un enlèvement abrasif (64) de matière, y compris des fibres et de la résine, de la pièce composite en fibres (1, 31) est entraîné dans un espace de travail défini par une unité d'enlèvement (24) et la pièce composite en fibres (1, 31),
dans lequel le dispositif est en outre configuré pour évacuer (65) la matière enlevée et la matière de sablage (28) hors de l'espace de travail grâce à la chute de pression,
**caractérisé en ce que**
la matière de sablage (28) présente une taille de grain moyenne dans la plage de 200 µm à 500 µm et
une distance du tuyau de sablage (23) par rapport à la pièce composite en fibres (1, 31) dans l'espace de travail se situe, lors du fonctionnement du dispositif, dans une plage de 3 à 12 mm.

15. Dispositif selon la revendication 14,
avec en outre au moins une unité de détection (51, 52) destinée à détecter un résultat d'enlèvement et une unité de commande, qui est configurée pour commander le dispositif sur la base d'un résultat de détection de l'unité de détection (51, 52).
